# EUROPÄISCHE PATENTSCHRIFT

(11) **EP 3 188 929 B1**
(45) Veröffentlichungstag und Bekanntmachung des Hinweises auf die Patenterteilung: **26.08.2020**
(21) Anmeldenummer: 16708339.3
(22) Anmeldetag: 09.02.2016
(51) Int. Cl.: B60N 2/75

(54) **ARMLEHNE**
ARMREST
ACCOUDOIR

(30) Priorität: 10.02.2015 DE 102015001551
(43) Veröffentlichungstag der Anmeldung: 12.07.2017
(73) Patentinhaber: GRAMMER AG, 92224 Amberg (DE)
(72) Erfinder: KELLER, Hubert, 92245 Kümmersbruck (DE)
(74) Vertreter: Roche, von Westernhagen & Ehresmann
(86) Internationale Anmeldenummer: PCT/DE2016/000039
(87) Internationale Veröffentlichungsnummer: WO 2016/127970

(56) Entgegenhaltungen:
- DE-A1- 19 915 469
- DE-A1-102006 048 107
- US-A- 4 828 323
- US-A1- 2007 013 220

## Beschreibung

Die Erfindung betrifft eine Armlehne, insbesondere für einen Fahrzeugsitz.

Aus der DE 199 15 469 A1 ist eine Armlehne bekannt, welche an einer Basiseinrichtung vorgesehen ist und um eine sitzfeste Schwenkachse verschwenkbar ist. Mit der Armlehne ist ein Segmentorgan mit einer Segmentzahnung fest verbunden. Die Segmentzahnung wirkt mit einem sitzfesten Ratschenorgan zusammen, um die Armlehne in bestimmten Positionen zu arretieren. Der Abstand der Segmentzahnung zu der Schwenkachse ist nur geringfügig kleiner als der Abstand der Schwenkachse zu einer Lagerstelle der Armlehne. Diese ansonsten vorteilhafte Armlehne ist insofern verbesserungswürdig, als das Segmentorgan einen großen Bauraum aufweist.

Es war Aufgabe der Erfindung eine Armlehne zu schaffen, die mit einer Verriegelungsvorrichtung versehen ist, die auch bei großen Haltekräften die Armlehne sicher in der eingestellten Position hält. Ferner war es Aufgabe der Erfindung eine Armlehne zu schaffen, die trotz der Fähigkeit zur Aufnahme großer Haltekräfte einen geringen Bauraum in Anspruch nimmt. Es war außerdem Aufgabe der Erfindung, eine Armlehne zu schaffen, die eine geringe Geräuschbelastung für den Fahrzeuginsassen darstellt.

Die Aufgabe wurde gelöst durch eine Armlehne mit den Merkmalen des Anspruchs 1.

Die erfindungsgemäße Armlehne umfasst einen Tragarm, welcher um eine Schwenkachse zwischen wenigstens einer Gebrauchsposition und mindestens einer Nichtgebrauchsposition einer festen Struktur, z. B. an einem fahrzeugfesten Basisteil, schwenkbar relativ zu der Struktur gelagert ist. Mittels einer zwischen einer Arretierstellung und einer Freigabestellung verstellbaren Verriegelungsvorrichtung ist der Tragarm in wenigstens einer Position und in wenigstens eine Richtung verriegelbar.

Die Verriegelungsvorrichtung umfasst zumindest einen Hebel, der geeignet ist, Kräfte von dem Tragarm auf die Struktur zu übertragen. Der Hebel kann z.B. mit dem Tragarm verbunden sein. Der Tragarm kann sich z. B. in wenigstens einer Position oder in wenigstens einer Relativposition zu dem Hebel an dem Hebel abstützen.

Der Hebel ist mit ersten Haltemitteln versehen, die mit zweiten Haltemitteln, welche mit der Struktur, insbesondere der Fahrzeugstruktur, verbunden sind, lösbar in Eingriff bringbar sind, um in wenigstens einer Arretierposition die Bewegung des Hebels in wenigstens eine Richtung und zu arretieren.

"In wenigstens eine Richtung arretieren" bedeutet im Sinne der Erfindung, dass die Schwenkbewegung des Hebels z.B. von der Verriegelungsvorrichtung in eine Richtung arretiert wird, in eine zweite Richtung aber möglich ist. Die ersten und zweiten Haltemittel bilden z. B. einen Freilauf oder ein Richtgesperre. Gemäß einer alternativen Ausführung kann die Bewegung des Hebels auch in beide Schwenkrichtungen arretiert sein. Der Hebel kann in einer Schwenkposition oder in mehreren Schwenkpositionen arretiert werden. Der Hebel ist relativ zu dem Tragarm bewegbar gelagert.

Mittels des Hebels ist es möglich, die Verriegelung weit von dem Drehgelenk des Tragarms zu beabstanden. Aufgrund des großen Hebelarms können große Haltekräfte erreicht werden. Dennoch kann erfindungsgemäß der Bauraum der Armlehne gering gehalten werden, da der Hebel nicht über den gesamten Schwenkbereich des Tragarms in der gleichen Relativposition zu dem Tragarm mitschwenkt. Darüber hinaus sind von der Verriegelungsvorrichtung verursachte Geräusche, wie z.B. das Ratschen der Verzahnung, weniger von dem Fahrzeuginsassen hörbar.

Der Hebel ist z.B. mittels eines Gelenks schwenkgelagert. Der Hebel kann z.B. mit dem Tragarm ein Schwenkgelenk bilden. Gemäß einer alternativen Ausführung bildet der Hebel z.B. ein Schwenkgelenk mit dem Basisteil. Auf diese Weise ist der Hebel um eine Schwenkachse schwenkbar und kann sich relativ zu dem Tragarm auf einer Schwenkbahn bewegen.

Die Bewegung des Tragarms und die Bewegung des Hebels sind z.B. in wenigstens einem Drehwinkelbereich des Tragarms gekoppelt. Die Bewegungskopplung kann z.B. mittels einer Feder erfolgen, die den Hebelarm in eine bestimmte Schwenkrichtung belastet. Der Tragarm und der Hebel nehmen z.B. in dem Winkelbereich eine definierte Relativposition zueinander ein. In wenigstens einer Relativposition des Tragarms zu dem Hebel sind Kräfte von dem Tragarm auf den Hebel übertragbar.

Einer Ausführungsform gemäß ist die Bewegung des Hebels mittels wenigstens eines ersten Anschlags begrenzt. Der erste Anschlag ist z.B. fahrzeugfest. Er kann z.B. an dem Basisteil mittelbar oder unmittelbar befestigt sein. Auf diese Weise kann die Bewegung des Tragarms von der Bewegung des Hebels entkoppelt werden. Der Tragarm und der Hebel bewegen sich z.B. mit unveränderter Relativposition zueinander in die gleiche Richtung, bis der Hebel in Kontakt mit dem ersten Anschlag gerät. Danach ist die Bewegung z.B. entkoppelt und der Tragarm kann in dieselbe Bewegungsrichtung weitergeschwenkt werden, während der Hebel von dem ersten Anschlag in seinem Freiheitsgrad eingeschränkt ist. Nach der Entkopplung kann sich die Relativposition zwischen Tragarm und Hebel z.B. ändern.

Auch die Bewegung des Tragarms kann z.B. mittels wenigstens eines strukturfesten, z.B. fahrzeugfesten, zweiten Anschlags begrenzt sein. Wenigstens eine Endposition des Tragarms kann z.B. durch den zweiten Anschlag definiert sein. Der zweite Anschlag kann z.B. an dem Basisteil ausgebildet sein.

Gemäß einer Ausgestaltung der Erfindung ist die Bewegung des Tragarms relativ zu dem Hebel mittels wenigstens eines dritten Anschlags in wenigstens eine Schwenkrichtung begrenzt. Auf diese Weise kann der Freiheitsgrad der Bewegung des Hebels relativ zu dem Tragarm eingeschränkt werden. Wenn ein bestimmter Mindestwinkel zwischen Tragarm und Hebel erreicht ist, kann sich der Tragarm z.B. an dem Hebel abstützen. Es ist aber z.B. möglich einen größeren Winkel zwischen Tragarm und Hebel einzustellen. Ggf. ist die Bewegung des Tragarms relativ zu dem Hebel durch einen Anschlag auf einen maximalen Schwenkwinkel begrenzt.

Eine Feder belastet den Hebel z.B. in eine erste Richtung. Die Feder belastet den Hebel z.B. in Anlage an den ersten Anschlag. Die Feder ist z.B. an dem Hebel und an der Struktur, insbesondere der Fahrzeugstruktur, z.B. an dem Basisteil, gehalten.

Die Verriegelungsvorrichtung ist z.B. derart ausgebildet, dass der Hebel in der Arretierstellung in eine erste Schwenkrichtung frei bewegbar ist und in eine zweite Schwenkrichtung blockiert ist. Mit diesem Richtgesperre wird ermöglicht, dass der Tragarm in der Arretierstellung in eine Richtung frei bewegbar ist, in eine andere Richtung aber arretiert ist. Der Tragarm kann z.B. in Bezug auf eine Bewegung nach oben in Richtung der Nichtgebrauchsposition frei schwenkbar sein, in Bezug auf eine Bewegung nach unten, in Richtung der Gebrauchsposition aber arretiert sein. Das Richtgesperre ist z.B. zwischen den ersten Haltemitteln und den zweiten Haltemitteln gebildet.

Gemäß einer alternativen Ausführungsform ist die Verriegelungsvorrichtung derart ausgebildet, dass der Hebelarm in der Arretierstellung in beide Schwenkrichtungen arretiert ist.

Gemäß einer Ausgestaltung der Erfindung sind die ersten und / oder die zweiten Haltemittel von einer Zahnstruktur ausgebildet, die Halteflächen aufweist. Die Halteflächen können die Bewegung der anderen Haltemittel in wenigstens eine Richtung blockieren. Die Zahnstruktur kann z.B. Schrägflächen und Steilflächen aufweisen, wobei die Schrägflächen eine Relativbewegung der Haltemittel in eine erste Richtung erlauben und wobei die Steilflächen eine Relativbewegung der Haltemittel in eine zweite Richtung verhindern. Die Halteflächen können wenigstens einem Arretiersitz zugeordnet sein.

Die zweiten Haltemittel sind z.B. einem bewegbar gelagerten Verriegelungselement zugeordnet. Das Verriegelungselement kann z.B. einen um eine Schwenkachse schwenkbaren Hebel bilden. Das Verriegelungselement umfasst z.B. wenigstens einen Arretiersitz mit wenigstens einer Arretierfläche, die eine Bewegung der ersten Arretiermittel in wenigstens eine Richtung verhindern.

Die ersten Haltemittel und die zweiten Haltemittel sind z.B. von einer Steuereinrichtung in Abhängigkeit ihrer Relativposition außer Eingriff und / oder in Eingriff bewegbar. Z.B. werden die Haltemittel in einer ersten Endposition zueinander außer Eingriff bewegt und einer zweiten Endposition zueinander in Eingriff bewegt. Die Armlehne umfasst z.B. eine Steuervorrichtung, welche in Abhängigkeit der Relativposition der ersten Haltmittel zu den zweiten Haltemitteln steuert, ob die ersten Haltemittel in Eingriff oder außer Eingriff bewegt werden. Gemäß einer alternativen Ausführung können die ersten und zweiten Haltemittel auch mittels einer Handhabe in Eingriff und / oder außer Eingriff bewegbar sein.

Gemäß einer Ausführungsform ist eine Memory-Vorrichtung vorgesehen, die zwischen einer Blockierstellung und einer Lösestellung bewegbar ist, wobei in der Blockierstellung der Hebel in der eingestellten Arretierposition blockiert ist und wobei der Hebel in der Lösestellung nicht blockiert ist. Eine Bewegung des Hebels kann z. B. mittels der Memory-Vorrichtung vollständig verhindert werden. Es kann auf diese Weise auch eine Bewegung des Hebels verhindert werden, in die der Hebel normalerweise frei bewegbar ist. Bei einem Freilauf oder einem Richtgesperre sind z.B. beide Bewegungsrichtungen gesperrt.

Ebenso kann mittels der Memory-Vorrichtung die Bewegung der Haltemittel in eine Endposition vermieden werden, in welcher die Haltemittel sich außer Eingriff bewegen. Wenn sich die Memory-Vorrichtung in der Blockierstellung befindet, kann der Tragarm z.B. in die vertikale Position bewegt und anschließend unmittelbar in die zuvor eingestellte Position zurückbewegt werden. Dass kann z. B. von Vorteil sein, wenn sich unter dem Tragarm ein Fach befindet. In diesem Fall bleibt die eingestellte Position erhalten, auch wenn der Benutzer den Tragarm für den Zugriff auf das Fach nach oben schwenkt.

Die Memory-Vorrichtung umfasst z.B. dritte Haltemittel. Die dritten Haltemittel sind z.B. einem dritten Hebel zugeordnet. Der dritte Hebel ist z.B. um eine Schwenkachse schwenkbar gelagert. Er kann z.B. an dem Basisteil gelagert sein. Die dritten Haltemittel umfassen z.B. wenigstens eine Haltefläche, die eine Bewegung des Hebels in wenigstens eine Richtung, d.h. z.B in eine Schwenkrichtung oder z.B. in zweientgegengesetzte Schwenkrichtungen, verhindern können.

Die Memory-Vorrichtung kann z.B. mittels einer Handhabe in die Blockierstellung und / oder in die Lösestellung bewegbar sein.

Die Memory-Vorrichtung umfasst z.B. eine Steuervorrichtung, mittels welcher die Memory-Vorrichtung nach der Betätigung in der Blockierstellung gehalten wird, bis der Tragarm eine bestimmte Bewegung durchgeführt hat. Z.B. bleibt die Memory-Vorrichtung solange in der Blockierstellung, bis der Tragarm um einen bestimmten Winkel in eine erste Richtung und anschließend in eine zweite Richtung in die Ausgangsposition zurückgeschwenkt wurde.

Weitere Vorteile der Erfindung ergeben sich anhand eines in den Fig. dargestellten Ausführungsbeispiels. Die schematischen Fig. zeigen:
Fig. 1 eine Seitenansicht der erfindungsgemäßen Armlehne, wobei sich ein Tragarm in einer etwa horizontalen Gebrauchsposition befindet und wobei sich eine Memory-Vorrichtung in der Lösestellung befindet,
Fig. 2 in Anlehnung an Fig. 1 eine Seitenansicht der Armlehne, wobei ein Hebel der Verriegelungsvorrichtung und ein Haltearm der Memory-Vorrichtung der besseren Übersicht halber nicht dargstellt sind,

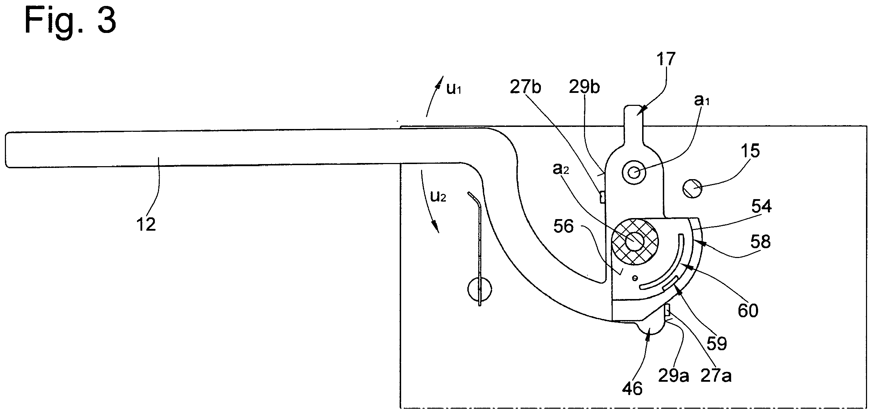

Fig. 3 eine Schnittdarstellung gemäß Ausschnittlinie III in Fig. 2,
Fig. 4 eine Seitenansicht der Armlehne, wobei sich der Tragarm in der obersten Gebrauchsposition befindet,
Fig. 5 eine Seitenansicht der Armlehne, wobei sich der Tragarm in einer bezüglich Fig. 4 in Richtung u1 geschwenkten Position befindet und wobei die Verriegelungsvorrichtung in der Freigabestellung angeordnet ist,
Fig. 6 eine Seitenansicht der Armlehne, wobei sich der Tragarm in einer bezüglich Fig. 5 in Richtung u1 geschwenkten Position befindet und wobei der Hebel an einem ersten Anschlag anliegt,

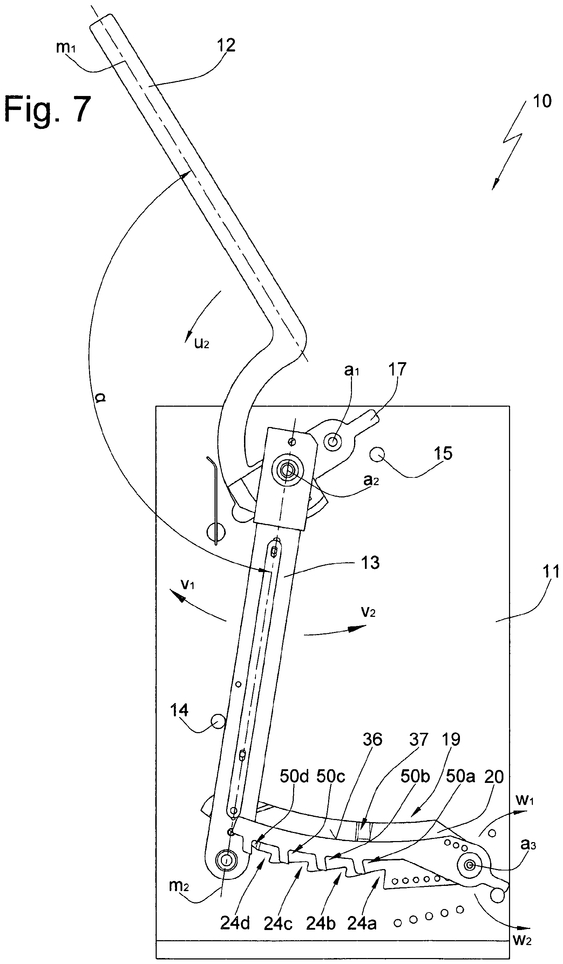

Fig. 7 eine Seitenansicht der Armlehne, wobei sich der Tragarm in einer bezüglich Fig. 6 in Richtung u1 geschwenkten Position befindet,
Fig. 8 eine Seitenansicht der Armlehne, wobei sich der Tragarm in einer bezüglich Fig. 7 in Richtung u1 geschwenkten oberen Endposition befindet,
Fig. 9, eine Seitenansicht der Armlehne, wobei sich der Tragarm in einer Position gemäß Fig. 1 befindet und, wobei die Memory-Vorrichtung in der Blockierstellung angeordnet ist,

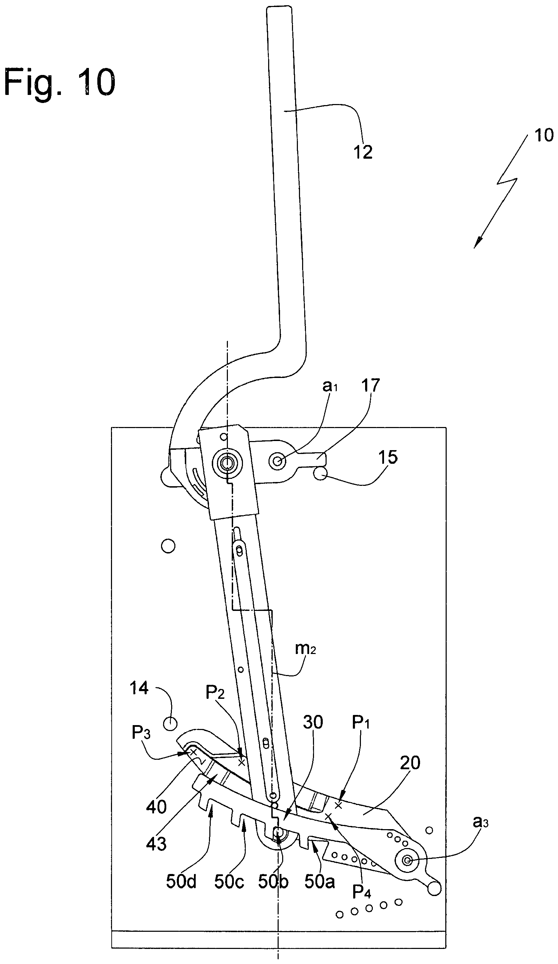

Fig. 10 eine Seitenansicht der Armlehne, wobei sich der Tragarm in der oberen Endposition befindet und die Memory-Vorrichtung in der Blockierstellung angeordnet ist, und
Fig. 11 eine Schnittdarstellung gemäß Schnittlinie XI-XI in Fig. 1.

Die Armlehne insgesamt ist in den Fig. mit dem Bezugszeichen 10 bezeichnet. Gleiche Bezugszeichen in den unterschiedlichen Fig. bezeichnen auch wenn kleine Buchstaben hinzugefügt oder weggelassen sind entsprechende Teile.

Die Armlehne 10 ist Teil eines Fahrzeugs und umfasst ein fahrzeugfestes Basisteil 11, einen Tragarm 12 sowie einen Hebelarm 13. An dem Tragarm 12 ist in nicht dargestellter Weise eine Armauflage befestigt, so dass auf einer Oberseite S_{O} des Tragarms 12 der Arm eines Fahrzeuginsassen abgestützt werden kann. Der Tragarm 12 ist um eine Schwenkachse a1 in Richtung u1 und u2 schwenkbar an dem Basisteil 11 gelagert und bildet mit dem Basisteil 11 ein Schwenkgelenk G1. Der Hebelarm 13 ist um eine Schwenkachse a2 in Richtung v1 und v2 schwenkbar an dem Tragarm 12 gelagert und bildet mit dem Tragarm 12 ein Schwenkgelenk G2. Die Schwenkachsen a1 und a2 sind voneinander beabstandet.

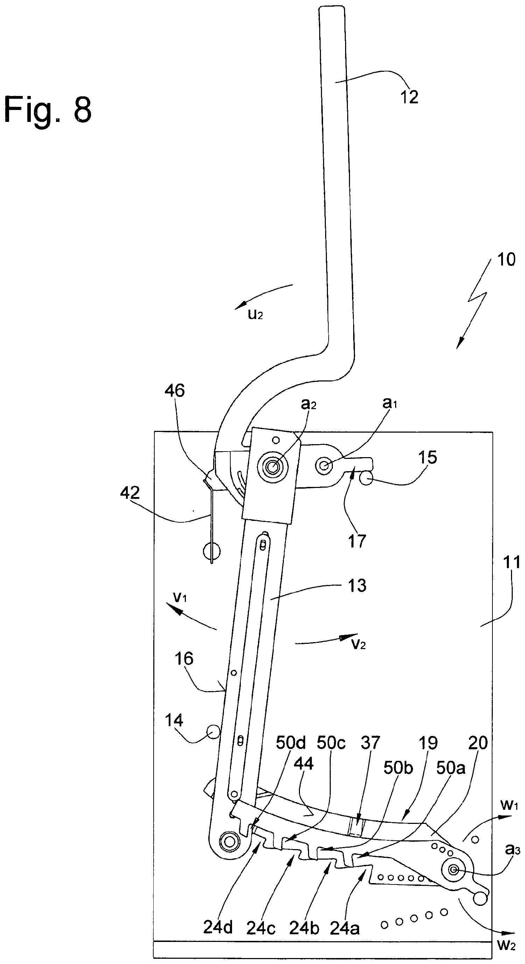

Die Bewegung des Hebelarms 13 ist relativ zu dem Basisteil 11 durch einen ersten Anschlag 14, welcher fest an dem Basisteil 11 angeordnet ist, begrenzt. Wenn eine Außenseite 16 des Hebelarms 13 mit dem ersten Anschlag 14 in Kontakt steht, hat der Hebelarm 13 eine Endstellung erreicht. Die Bewegung des Tragarms 12 in Richtung u1 ist relativ zu dem Basisteil 11 durch einen zweiten Anschlag 15 begrenzt. Gemäß Fig. 8 liegt eine Anschlagfläche eines Anschlags 17 des Tragarms 12 an dem zweiten Anschlag 15 an. Die Bewegung des Tragarms 12 könnte in einer alternativen, nicht dargestellten Ausführung zusätzlich auch in Richtung u2 relativ zu dem Basisteil 11 durch einen Anschlag begrenzt sein.

In der oberen Endstellung verrastet ein - im Ausführungsbeispiel als Vorsprung ausgebildeter - Bereich 46 des Tragarms 12 mit einer Feder 42, wodurch der Tragarm 12 stabil in der oberen Endstellung gehalten ist. Durch Überwindung der Federkraft der Rastfeder 42 kann der Tragarm 12 in Richtung u2 geschwenkt werden.

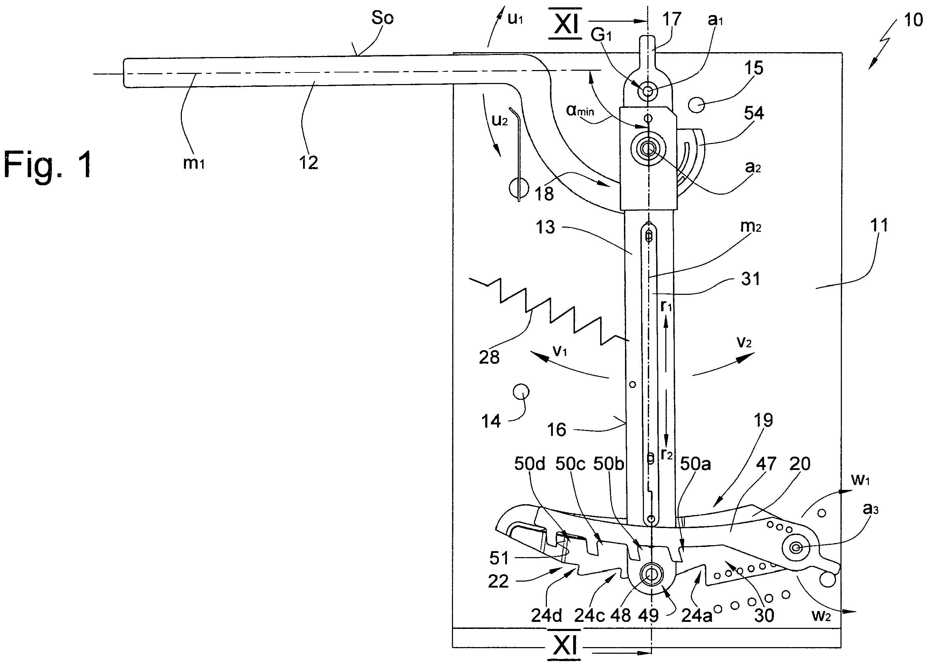

Außerdem ist die Bewegung des Hebelarms 13 relativ zu dem Tragarm 12 mittels einer Begrenzungsvorrichtung 18 eingeschränkt, die im vorliegenden Ausführungsbeispiel von einem an dem Hebelarm 13 ausgebildeten oder daran befestigten dritten Anschlägen 27a und 27b gebildet ist. Die dritten Anschläge 27a und 27b wirken mit Gegenanschlägen 29a und 29b des Tragarms 12 zusammen. Auf diese Weise ist der Hebelarm 13 relativ zu dem Tragarm 12 nur in einem begrenzten Bereich eines Winkels α bewegbar, der zwischen einer Mittelachse m1 des Tragarms 12 und einer Mittelachse m2 des Hebels 13 gebildet ist. Der minimale Winkel αₘᵢₙ, z. B. etwa ein rechter Winkel, ist in Fig. 1 dargestellt. Der Tragarm 12 kann sich so in Richtung u2 an dem Hebelarm 13 abstützen. Der Hebelarm 13 ist von einer Feder 28, welche an dem Hebelarm 13 und an dem Basisteil 11 befestigt ist, in Richtung v1 belastet.

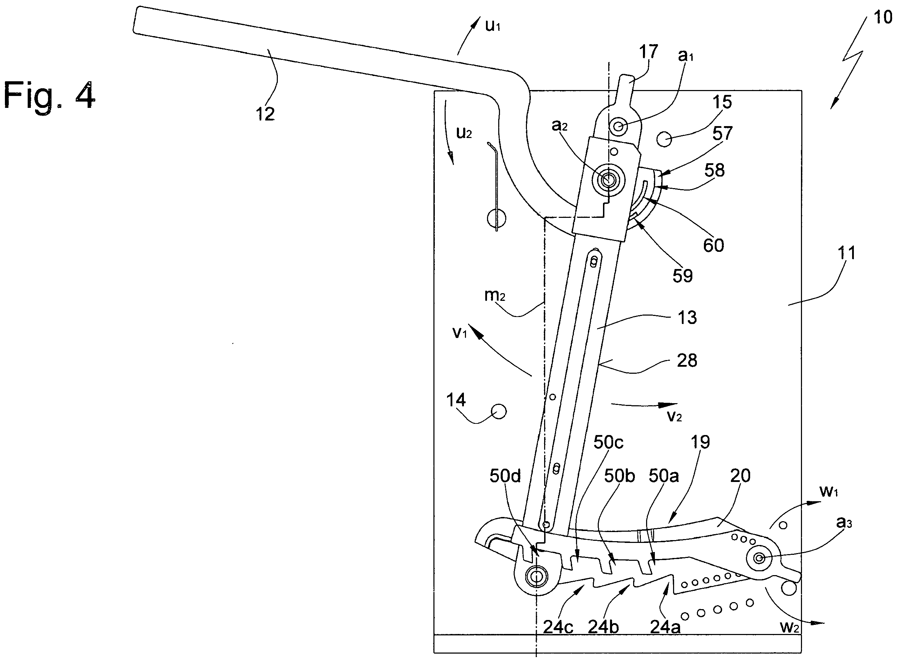

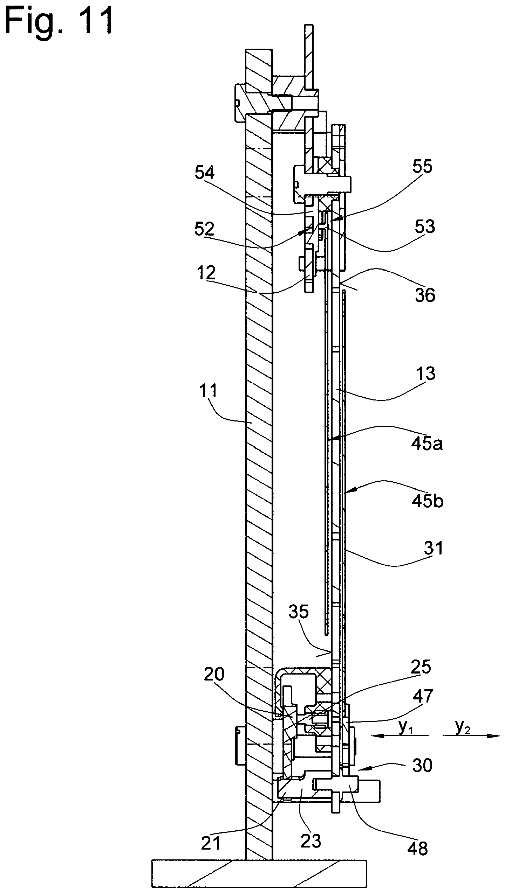

Mittels einer Verriegelungsvorrichtung 19, die zwischen einer Arretierstellung und einer Freigabestellung bewegbar ist, ist der Tragarm 12 in unterschiedlichen Positionen arretierbar. Die Verriegelungsvorrichtung 19 bildet ein Richtgesperre, welches in der Arretierstellung (siehe z. B. Figuren 1 und 4) eine Bewegung des Tragarms 12 aus der jeweiligen Position in Richtung u1 erlaubt, aber eine Bewegung in Richtung u2 verhindert. Die Verriegelungsvorrichtung umfasst einen Riegelarm 20, den Hebelarm 13, erste Haltemittel 21 (siehe Fig. 11), die in dem Ausführungsbeispiel die Form eines Stiftes 23 aufweisen, und zweite Haltemittel 22, die in dem Ausführungsbeispiel in Form von Aussparungen 24a, 24b, 24c und 24d des Riegelarms 20 ausgebildet sind. Der Stift 23 ist fest an dem Hebelarm 13 gehalten. Er ragt bezüglich einer Innenfläche 35 des Hebelarms 13 vor.

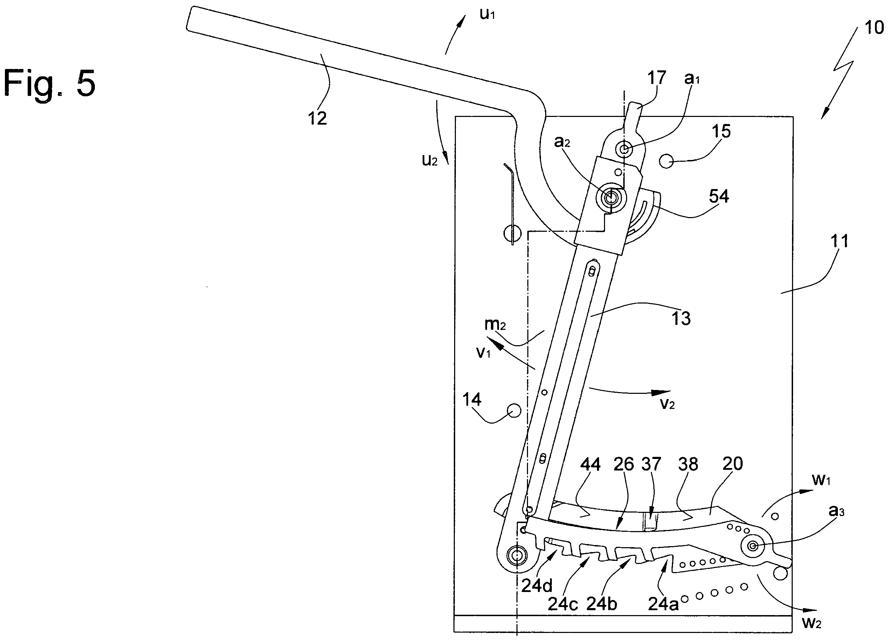

Der Riegelarm 20 ist um eine Schwenkachse a3 in die Richtungen w1 und w2 schwenkbar an dem Basisteil 11 gehalten. Von einer nicht dargestellten Feder ist der Riegelarm 20 in Schwenkrichtung w2 belastet. Die Aussparungen 24a bis 24d weisen jeweils eine Steilfläche 33 und eine Schrägfläche 34 auf. Die Steilfläche 33 blockiert in der Arretierstellung der Verriegelungsvorrichtung eine Bewegung des Hebelarms 13 in Richtung v2, während die Schrägfläche 34 eine Bewegung des Hebelarms 13 in Richtung v1 erlaubt. Auf diese Weise wirkt die Verriegelungsvorrichtung als Richtgesperre, solange der Stift 23 mit den zweiten Haltemitteln 22 in Eingriff ist. Der Stift 23 kann außer Eingriff mit den zweiten Haltemitteln 22 gebracht werden, indem der Riegelarm 20 in Richtung w1 in die Position gemäß Fig. 5 geschwenkt wird. Gemäß Fig. 5 befindet sich die Verriegelungsvorrichtung in der Freigabestellung.

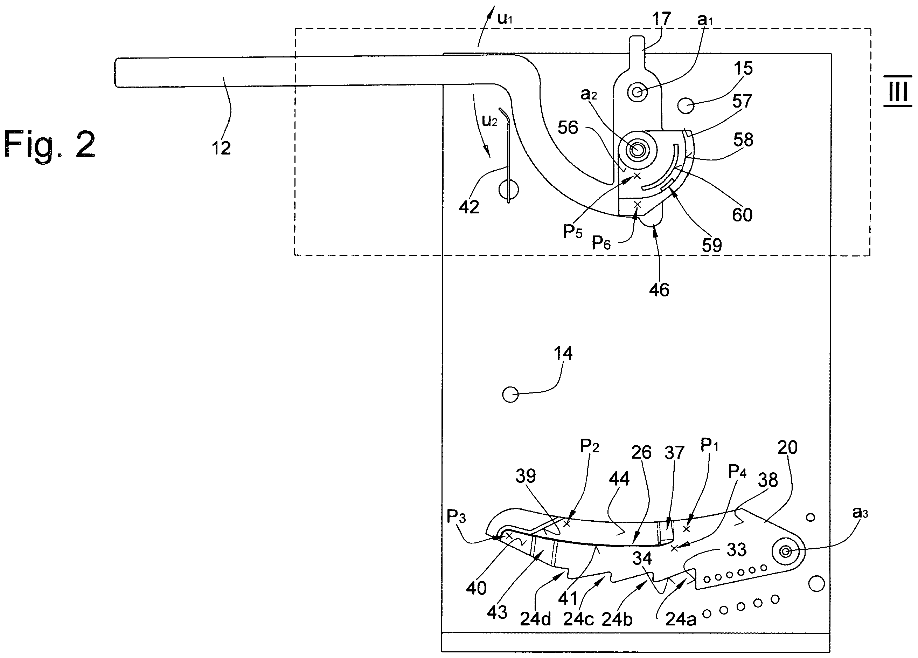

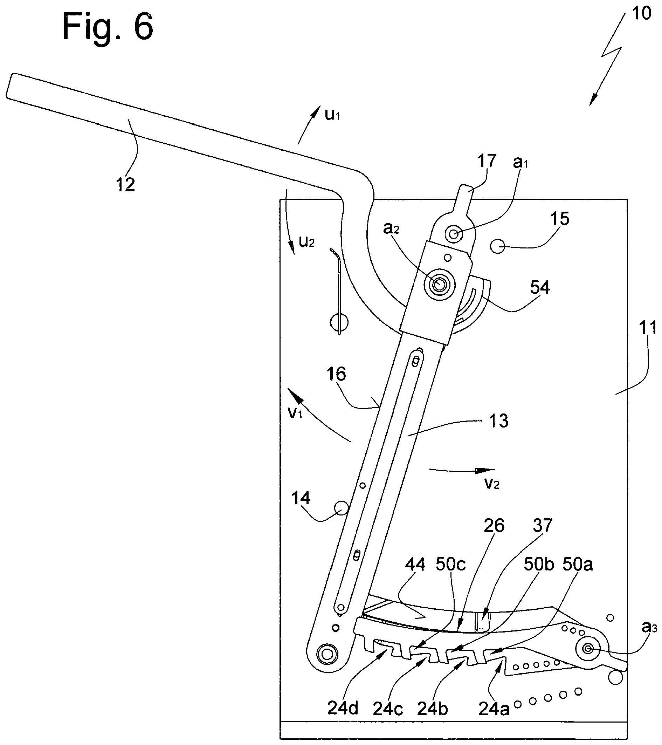

An dem Hebelarm 13 ist ein Steuerstift 25 gehalten (siehe Fig. 11), welcher bezüglich der Innenfläche 35 des Hebelarms 13 vorragt und der mit einer Steuerstruktur 26 des Riegelarms 20 (siehe Fig. 2) in Eingriff ist. Der Steuerstift 25 ist in die Richtungen y1 und y2 bewegbar und in die Richtung y1 in den Kontakt mit der Steuerstruktur 26 federbelastet. Wenn der Tragarm 12 in der unteren Endposition ist, steht der der Stift 23 in Eingriff mit Aussparung 24a und der Steuerstift 25 befindet sich in der Position P1 (siehe Fig. 2) in Kontakt mit einer Außenfläche 38 des Riegelarms 20. Wird der Tragarm 12 in Richtung u1 nach oben geschwenkt, bewegt sich der Hebelarm 13 ebenfalls in Richtung u1, weil die Feder 28 den Hebelarm 13 in Richtung u1 belastet. Dabei wird der Stift 23 ratschend über die zweiten Haltemittel 22 bewegt. Der Steuerstift 25 bewegt sich über eine Rampe 37 auf eine Außenfläche 44, die bezüglich der Außenfläche 38 ein höheres Niveau hat. Wenn sich der Stift 23 in der Aussparung 24d befindet, ist der Steuerstift in der Position P2 angeordnet. Bei weiterer Bewegung des Tragarms 12 in Richtung u1 (siehe Fig. 5) bewegt sich der Hebelarm 13 in Richtung v1, bis er gemäß Fig. 6 an dem ersten Anschlag 14 anliegt.

Dabei kommt der Steuerstift 25 mit einer Führungsfläche 39 in Kontakt. Die Bewegung des Steuerstiftes 25 in Richtung v1 verursacht eine Schwenkbewegung des Riegelarms 20 in Richtung w1, bis der Steuerstift 25 an einer Außenfläche 40 zur Anlage kommt. Wenn der Hebelarm 13 mit dem ersten Anschlag 14 in Kontakt steht, befindet sich der Steuerstift 15 in der Position P3 in Kontakt mit der Außenfläche 40 und mit einer Führungsfläche 41, die quer zu der Außenfläche 40 angeordnet ist. Aufgrund des Kontaktes des Steuerstiftes 25 mit der Führungsfläche 41 kann der Riegelarm 20 nicht in Richtung w2 zurückschwenken und der Stift 23 wird außer Eingriff mit den zweiten Haltemitteln 22 gehalten. Die Verriegelungsvorrichtung 19 befindet sich dann in der Freigabestellung.

Bei einer Bewegung des Tragarms 12 in Richtung u2 wird über die dritten Anschläge 27a und 27b der Hebelarm 13 mitgenommen und entgegen der Federkraft der Feder 28 in Richtung v2 geschwenkt. Dabei bewegt sich der Steuerstift 25 entlang der Führungsfläche 41. Über eine Rampe 43 gelangt der Steuerstift 25 wieder in Kontakt mit der Außenfläche 38 zu dem Punkt P4. Kurz vor Erreichen der unteren Endposition des Tragarms 12 gerät der Steuerstift 25 außer Kontakt mit der Führungsfläche 41, so dass der Riegelarm 20 in Richtung w2 schwenken kann, wobei der Stift 23 in den Eingriff mit der Aussparung 24a der zweiten Haltemittel 22 gerät und wobei sich der Steuerstift 25 in die Position P1 bewegt. Die Verriegelungsvorrichtung 19 befindet sich dann in der Arretierstellung.

Der Tragarm 12 und der Hebelarm 13 weisen, wenn der Tragarm 12 in Richtung u1 geschwenkt wird, solange die gleiche Relativposition zueinander auf, bis der Hebelarm 13 an dem ersten Anschlag 14 anschlägt. Bei weiterer Bewegung des Tragarms 12 in Richtung u1, ändert sich die Relativposition zwischen Tragarm 12 und Hebelarm 13, wobei sich der Winkel α vergrößert. Der Tragarm 12 kann, wie oben erwähnt, in Richtung u1 in die obere Endposition bewegt werden, in welcher der Anschlag 17 an dem zweiten Anschlag 15 anliegt (siehe Fig. 8). Aus der oberen Endposition kann der Tragarm 12 in Richtung u2 direkt in die untere Endposition bewegt werden, wenn die Memory-Funktion nicht aktiviert ist, die nachfolgend erläutert wird.

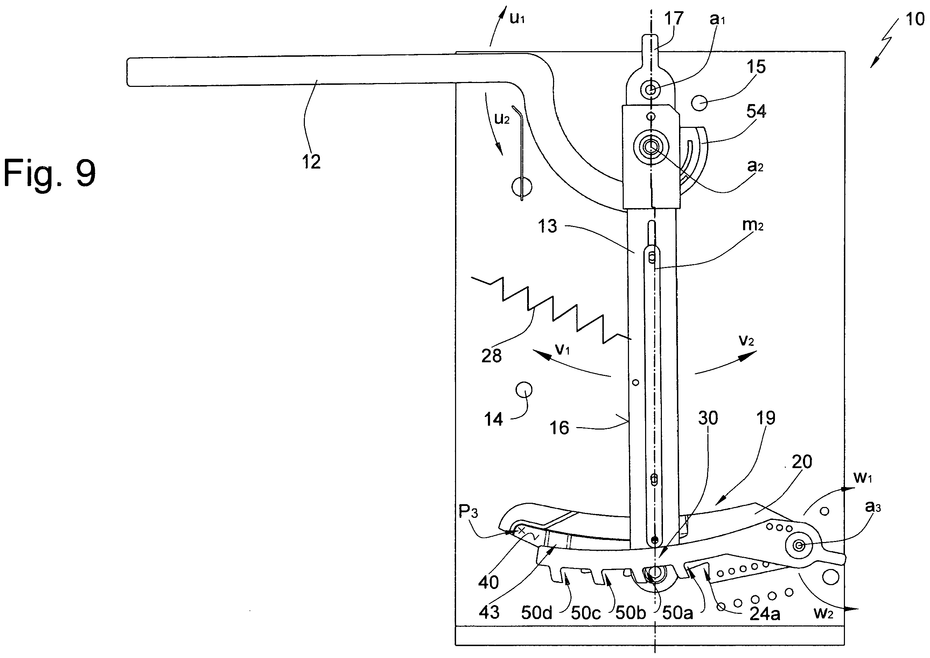

Die Armlehne umfasst eine Memory-Vorrichtung 30, welche zwischen einer Blockierstellung und einer Lösestellung bewegbar ist. Die Memory-Vorrichtung kann mittels einer nicht dargestellten Handhabe betätigt werden. Die Handhabe steht in nicht dargestellter Weise mit einem Schieber 31 in Verbindung, welcher zwischen der in Fig. 1 dargestellten oberen Position und der in Fig. 9 dargestellten unteren Position in die Richtungen r1 und r2 verlagerbar ist. In der Lösestellung befindet sich der Schieber in der oberen Position und in der Blockierstellung befindet sich der Schieber in der unteren Position. Der Schieber 31 erstreckt sich entlang der Mittelachse m2 des Hebelarms 13 und umfasst einen ersten Bereich 45a, welcher sich auf der Innenfläche 35 bewegt, sowie einen zweiten Bereich 45b, welcher auf der Außenfläche 36 angeordnet ist. Die Bereiche 45a und 45b sind miteinander verbunden und bewegen sich daher in die gleiche Richtung r1 oder r2.

In der unbetätigten Position der Memory-Vorrichtung 30 nimmt der Schieber 31 die Position gemäß Fig. 1 ein. In der betätigten Position der Memory-Vorrichtung 30 ist der Schieber 31 in der Position gemäß Fig. 9 angeordnet. Die Betätigung der der Memory-Vorrichtung 30 hat zur Folge, dass sich der Schieber 31 in Richtung r1 bewegt. Ein in die Richtungen w1 und w2 um die Schwenkachse a3 schwenkbarer Haltearm 47 ist in Richtung w1 federbelastet. Wird der Schieber 31 von der oberen Position in die untere Position bewegt, verschwenkt der zweite Bereich 45b des Schiebers 31 den Haltearm 47 entgegen der Federkraft in Richtung w2.

Dabei bewegt sich der Haltearm 47 in Eingriff mit einem Stift 48, welcher an dem Endbereich 49 auf einer Außenfläche 36 des Hebelarms 13 befestigt ist, und hält den Hebelarm 13 in seiner eingestellten Position. Der Haltearm 31 weist mehrere Aussparungen 50a, 50b, 50c und 50d auf, die jeweils eine Haltefläche 51 umfassen. Wenn eine der Aussparungen 50a bis 50d in Eingriff mit dem Stift 48 ist, begrenzt die Haltefläche 51 den Freiheitsgrad des Hebelarms 13, so dass eine Relativbewegung zwischen dem Hebelarm 13 und dem Tragarm 12 stattfinden kann. Bei betätigter Memory-Vorrichtung 30 kann sich also der Tragarm 12 relativ zu dem Hebelarm 13 bewegen, z.B. in dem Sinne, dass sich der Schwenkwinkel α vergrößert.

Mittels einer Steuereinrichtung 52 der Memory-Vorrichtung 30 wird der Haltearm 47 von dem Schieber 31 in der betätigten Position gehalten. Der Tragarm 12 kann dann in die obere Endposition bewegt werden, ohne dass sich der Stift 23 aus der jeweiligen Aussparung 24a, 24b, 24c oder 24d herausbewegt. Die Memory-Vorrichtung 30 bleibt solange in der Blockierstellung, bis der Tragarm 12 um einen bestimmten Winkel α in Richtung u1 und zurück in Richtung u2 in die Ausgangslage geschwenkt wird. Danach kann sich die Memory-Vorrichtung 30 automatisch in die unbetätigte Position bewegen, wobei sich der Schieber 31 in Richtung r2 bewegt und den Haltearm 47 freigibt, so dass dieser unter der Kraft der Feder in Richtung w1 außer Eingriff mit dem Stift 23 schwenken kann.

Die Steuereinrichtung 52 umfasst einen - z.B. an einem oberen Endbereich 55 des ersten Bereichs 45 befestigten - Stellstift 53, welcher von einer Feder in Richtung y in Anlage an eine mit dem Tragarm 12 fest verbundene Steuerkontur 54 gehalten wird. Die Steuerkontur 54 ist in Fig. 2 dargestellt. Wenn die Memory-Vorrichtung 30 nicht betätigt ist, behält der Stellstift 53 die, in Fig. 2 gezeigte, obere Position. Wenn der Tragkörper 12 gemäß Fig. 1 etwa in der horizontalen Position angeordnet ist, befindet sich der Stift 23 in der zweiten Aussparung 24b und der Stellstift 53 hat relativ zu der Steuerkontur 54 die Position P5. Wird der Tragarm 12 dann weiter in Richtung u1 bewegt, verlagert sich die Steuerkontur 54 relativ zu dem Steuerstift.

Die Betätigung der Memory-Vorrichtung 30 hat zur Folge, dass sich der Schieber 31 radial in Richtung r1 bewegt. Der Stellstift 53 wird dabei von einer ersten Fläche 56 der Steuerkontur 54 auf eine zweite Fläche 57 in die Position P6 bewegt, welche ein niedrigeres Niveau hat, als die erste Fläche 56 und durch eine Führungsfläche 58 von der ersten Fläche 56 getrennt ist. Die Führungsfläche 58 ist quer zu der zweiten Fläche 57 angeordnet. Die Führungsfläche 58 bildet eine Anlagefläche, welche von dem Stellstift 53 nicht mehr in Richtung r2 passiert werden kann. Der Schieber 31 wird daher in der unteren Position gehalten.

Erst wenn der Tragarm 12 mit der Steuerkontur 54 um einen gewissen Winkelbetrag in Richtung u1 geschwenkt wird, bewegt sich eine Rampe 59 der Steuerkontur 54 so vor den Stellstift 53, dass dieser sich wieder in Richtung r2 auf die erste Fläche 56 zurückbewegen kann, bis er mit einer teilkreisförmigen Führungsfläche 60 kollidiert.

Die Führungsfläche 60 verhindert eine Bewegung der Memory-Vorrichtung in die unbetätigte Position, bis der Tragarm 12 seine Ausgangsposition relativ zu dem Hebelarm 13 erreicht hat, in welcher die Memory-Vorrichtung 30 betätigt wurde. Dann kann sich der Stellstift 53 links an der Führungsfläche 60 vorbei in Richtung r2 bewegen, wobei sich der mit dem Stellstift 53 verbundene Schieber 31 ebenfalls in Richtung r2 in die unbetätigte Position zurückbewegt. Der Haltearm 20 wird nun von der nicht dargestellten Feder in Richtung u1 außer Eingriff mit dem Steuerstift bewegt. Das hat zur Folge, dass sich der Hebelarm 13 bis zur Anlage an dem ersten Anschlag 14 wieder in Richtung v1 bewegt, wenn der Tragarm 12 in Richtung u1 geschwenkt wird.

## Patentansprüche

1. Armlehne, insbesondere für einen Fahrzeugsitz, umfassend einen Tragarm (12), welcher um eine an einer festen Struktur ausgebildete Schwenkachse (a1) zwischen wenigstens einer Gebrauchsposition und mindestens einer Nichtgebrauchsposition schwenkbar ist und mittels einer Verriegelungsvorrichtung (19), die zwischen einer Arretierstellung und einer Freigabestellung bewegbar ist, in wenigstens einer Position verriegelbar ist, wobei dem Tragarm (12) erste Haltemittel (21) zugeordnet sind, die mit zweiten Haltemitteln (22), welche mit der Fahrzeugstruktur verbunden sind, lösbar in Eingriff bringbar sind, um die Bewegung des Tragarms (12) in wenigstens eine Richtung (u2) und in wenigstens einer Arretierposition zu arretieren, **dadurch gekennzeichnet, dass** die Verriegelungsvorrichtung (19) zumindest einen mit dem Tragarm (12) zusammenwirkenden Hebel (13) umfasst, welcher relativ zu dem Tragarm (12) bewegbar gelagert ist, wobei der Hebel (13) mit den ersten Haltemitteln versehen ist.

2. Armlehne nach Anspruch 1, **dadurch gekennzeichnet, dass** der Hebel (13) mittels eines Gelenks schwenkgelagert ist.

3. Armlehne nach Anspruch 1 oder 2, **dadurch gekennzeichnet, dass** die Bewegung des Tragarms (12) und die Bewegung des Hebels (13) in wenigstens einem Drehwinkelbereich des Tragarms (12) gekoppelt sind.

4. Armlehne nach einem der vorangehenden Ansprüche, **dadurch gekennzeichnet, dass** die Bewegung des Hebels (13) mittels wenigstens eines Anschlags (14) begrenzt ist.

5. Armlehne nach einem der vorangehenden Ansprüche, **dadurch gekennzeichnet, dass** die Bewegung des Tragarms (12) mittels eines Anschlags begrenzt ist.

6. Armlehne nach einem der vorangehenden Ansprüche, **dadurch gekennzeichnet, dass** die Bewegung des Tragarms (12) relativ zu dem Hebel (13) mittels wenigstens eines Anschlags (27) in wenigstens eine Schwenkrichtung (u1) des Tragarms (12) begrenzt ist.

7. Armlehne nach einem der vorangehenden Ansprüche, **dadurch gekennzeichnet, dass** die ersten Haltemittel (21) und / oder die zweiten Haltemittel (22) von einer Zahnstruktur gebildet sind, die Halteflächen (51) aufweist.

8. Armlehne nach einem der vorangehenden Ansprüche, **dadurch gekennzeichnet, dass** die zweiten Haltemittel (22) einem Verriegelungselement zugeordnet sind, welches bewegbar gelagert ist.

9. Armlehne nach einem der vorangehenden Ansprüche, **dadurch gekennzeichnet, dass** die ersten Haltemittel (21) und die zweiten Haltemittel (22) von einer Steuereinrichtung in Abhängigkeit ihrer Relativposition außer Eingriff und / oder in Eingriff bewegbar sind.

10. Armlehne nach einem der vorangehenden Ansprüche, **dadurch gekennzeichnet, dass** eine Memory-Vorrichtung (44) vorgesehen ist, die zwischen eine Blockierstellung und einer Lösestellung bewegbar ist, wobei in der Blockierstellung der Hebel (13) in der eingestellten Arretierposition blockiert ist und wobei der Hebel (13) in der Lösestellung nicht blockiert ist.

11. Armlehne nach Anspruch 10, **dadurch gekennzeichnet, dass** die Memory-Vorrichtung (44) eine Steuereinrichtung (52) umfasst, mittels welcher die Memory-Vorrichtung (44) nach der Betätigung in der Blockierstellung verbleibt, bis der Tragarm (12) einen bestimmten Bewegungsablauf durchgeführt hat.

## Claims

1. An armrest, in particular for a vehicle seat, comprising a support arm (12) pivotal about a pivot axis (a₁) formed on a fixed structure between at least one use position and at least one non-use position and latchable in at least one position by a latch (19) movable between a locking position and a release position, wherein a first latch assembly (21) is provided on the support arm (12) and engageable with a second latch assembly (22) connected to the vehicle structure in order to block pivoting of the support arm (12) in at least one direction (u₂) and lock same in at least one locked position, **characterized in that** the latch (19) comprises at least one lever (13) that cooperates with the support arm (12) and is mounted in a manner allowing movement relative to the support arm (12), the lever (13) carrying the first latch assembly.

2. The armrest according to claim 1, **characterized in that** a pivot pivotally supports the lever (13).

3. The armrest according to claim 1 or 2, **characterized in that** pivoting of the support arm (12) and pivoting of the lever (13) are coupled in at least one rotary angular range of the support arm (12).

4. The armrest according to one of the preceding claims, **characterized in that** pivoting of the lever (13) is limited by at least one stop (14).

5. The armrest according to one of the preceding claims, **characterized in that** pivoting of the support arm (12) is limited by a stop.

6. The armrest according to one of the preceding claims, **characterized in that** pivoting of the support arm (12) relative to the lever (13) is limited in at least one pivot direction (u₁) of the support arm (12) by at least one stop (27).

7. The armrest according to one of the preceding claims, **characterized in that** the first latch assembly (21) and/or the second latch assembly (22) is formed by a tooth structure having retaining surfaces (51).

8. The armrest according to one of the preceding claims, **characterized in that** the second latch assembly (22) has a locking element mounted in a manner allowing movement.

9. The armrest according to one of the preceding claims, **characterized in that** the first latch assembly (21) and/or the second latch assembly (22) can be moved out of engagement and/or into engagement by a controller according to their relative position.

10. The armrest according to one of the preceding claims, **characterized in that** a memory device (44) is provided that is movable between a holding position and a freeing position, the lever (13) being blocked in the holding position in the selected locking position, the lever (13) not being blocked in the freeing position.

11. The armrest according to claim 10, **characterized in that** the memory device (44) comprises a controller (52) that holds the memory device (44) in the locking position after actuation until the support arm (12) has executed a predetermined movement process.

## Revendications

1. Accoudoir, destiné en particulier à un siège de véhicule, comprenant un bras de support (12) qui peut pivoter autour d'un axe de rotation (a1) formé sur une structure fixe, entre au moins une position d'utilisation et au moins une position de non-utilisation, et qui peut être verrouillé dans au moins une position au moyen d'un dispositif de verrouillage (19) mobile entre une position d'arrêt et une position de libération, au bras de support (12) étant associés des premiers moyens de retenue (21) qui peuvent être engagés de façon amovible avec des deuxièmes moyens de retenue (22) qui sont reliés avec la structure du véhicule, pour arrêter le mouvement du bras de support (12) dans au moins une direction (u2) et dans au moins une position d'arrêt, **caractérisé en ce que** le dispositif de verrouillage (19) comporte au moins un levier (13) coopérant avec le bras de support (12) qui est monté de façon mobile par rapport au bras de support (12), ce levier (13) étant doté des premiers moyens de retenue.

2. Accoudoir selon la revendication 1, **caractérisé en ce que** le levier (13) est monté de manière à pivoter au moyen d'une articulation.

3. Accoudoir selon la revendication 1 ou 2, **caractérisé en ce que** le mouvement du bras de support (12) et le mouvement du levier (13) sont couplés au moins sur une plage de l'angle de rotation du bras de support (12).

4. Accoudoir selon une des revendications précédentes, **caractérisé en ce que** le mouvement du levier (13) est limité au moins au moyen d'une butée (14).

5. Accoudoir selon une des revendications précédentes, **caractérisé en ce que** le mouvement du bras de support (12) est limité au moyen d'une butée.

6. Accoudoir selon une des revendications précédentes, **caractérisé en ce que** le mouvement du bras de support (12) par rapport au levier (13) est limité au moyen au moins d'une butée (27) dans au moins une direction de rotation (u1) du bras de support (12).

7. Accoudoir selon une des revendications précédentes, **caractérisé en ce que** les premiers moyens de retenue (21) et/ou les deuxièmes moyens de retenue (22) sont formés par une structure dentée qui présente des surfaces de retenue (51).

8. Accoudoir selon une des revendications précédentes, **caractérisé en ce que** les deuxièmes moyens de retenue (22) sont associés à un élément de verrouillage qui est monté de façon mobile.

9. Accoudoir selon une des revendications précédentes, **caractérisé en ce que** les premiers moyens de retenue (21) et les deuxièmes moyens de retenue (22) peuvent être engagés et/ou désengagés par un dispositif de commande en fonction de leur position relative.

10. Accoudoir selon une des revendications précédentes, **caractérisé en ce qu'**il est prévu un dispositif à mémoire (44) qui est mobile entre une position de blocage et une position de déblocage, en position de blocage, le levier (13) étant bloqué dans la position d'arrêt définie et, en position de déblocage, le levier (13) n'étant pas bloqué.

11. Accoudoir selon une des revendications précédentes, **caractérisé en ce que** le dispositif à mémoire (44) comprend un dispositif de commande (52) au moyen duquel le dispositif à mémoire (44) reste après l'activation dans la position de blocage jusqu'à ce que le bras de support (12) ait effectué une séquence de mouvements définie.
